# DEMANDE DE BREVET EUROPEEN

(11) **EP 0 761 618 A1**
(43) Date de publication de la demande: **12.03.1997**
(21) Numéro de dépôt: 96401910.3
(22) Date de dépôt: 06.09.1996
(51) Int. Cl.: C03C 17/36

(54) **Procédé de fabrication de substrats transparents revêtus d'un empilement de couches minces, à propriétés de réflexion dans l'infrarouge et/ou dans le domaine du rayonnement solaire**

(30) Priorité: 07.09.1995 DE 19533053
(71) Demandeur: SAINT-GOBAIN VITRAGE, 92400 Courbevoie (FR)
(72) Inventeur: Huhn, Norbert, 52134 Herzogenrath (DE); Heinz, Bernhard, 52074 Aachen (DE)
(74) Mandataire: Renous Chan, Véronique

(57) **Abrégé**

L'invention concerne un procédé de fabrication d'un substrat transparent, notamment en verre ou en matériau plastique, muni d'un empilement de couches comportant au moins une couche métallique à propriétés dans l'infrarouge, notamment bas-émissive du type argent, la couche métallique comportant au moins une sur-couche de protection et de préférence également au moins une sous-couche de protection. On choisit la nature des matériaux constituant la ou les couches de protection de façon à ce qu'ils soient aptes à fixer l'oxygène et on dépose la ou les couches métalliques à propriétés dans l'infrarouge par pulvérisation dans une atmosphère comprenant au moins un agent oxydant, notamment de l'oxygène.

## Description

L'invention concerne un procédé de fabrication de substrats transparents, notamment en verre ou en matériaux plastique, revêtus d'un empilement de couches minces comprenant au moins une couche métallique pouvant agir sur le rayonnement solaire et/ou sur le rayonnement infrarouge de grande longueur d'onde.

L'invention concerne également l'utilisation de tels substrats pour fabriquer des vitrages d'isolation thermique et/ou de protection solaire, ci-après désignés sous le terme de vitrages « fonctionnels ». Ces vitrages peuvent équiper aussi bien les bâtiments que les véhicules, en vue notamment de diminuer l'effort de climatisation et/ou de réduire une surchauffe excessive entraînée par l'importance toujours croissante des surfaces vitrées dans les pièces et habitacles.

Ce type d'empilement de couches minces connu pour conférer à des substrats transparents des propriétés thermiques, tout particulièrement de bas-émissivité, est constitué principalement par une couche métallique, notamment en argent, disposée entre deux revêtements de matériau diélectrique du type oxyde métallique. On le fabrique généralement par une succession de dépôts effectués par une technique utilisant le vide comme la pulvérisation cathodique, éventuellement assistée par champ magnétique. Jusque-là on pouvait aussi prévoir deux couches métalliques très fines de part et d'autre de la couche d'argent, la couche sous-jacente en tant que couche d'accrochage ou de nucléation, et la surcouche en tant que couche de protection ou « sacrificielle » afin d'éviter l'oxydation de l'argent, si la couche d'oxyde qui la surmonte est déposée par pulvérisation réactive en présence d'oxygène.

Si la couche d'argent détermine essentiellement les performances thermiques, anti-solaires et/ou de bas-émissivité du vitrage final, les couches de matériau diélectrique remplissent plusieurs rôles, puisqu'elles agissent tout d'abord sur l'aspect optique du vitrage obtenu de manière interférentielle. Elles protègent en outre la couche d'argent des agressions chimiques et/ou mécaniques.

On demande actuellement de plus en plus que ces vitrages fonctionnels bas-émissifs ou anti-solaires présentent aussi des caractéristiques inhérentes aux substrats eux-mêmes, notamment esthétiques (qu'ils puissent être galbés), mécaniques (qu'ils soient plus résistants), ou de sécurité (qu'ils ne blessent pas en cas de bris). Cela nécessite de faire subir aux substrats verriers des traitements thermiques connus en eux-mêmes du type bombage, recuit, trempe. S'ils sont effectués sur les substrats déjà revêtus de l'empilement, sans précaution ou adaptation des couches minces, ils tendent à dégrader irréversiblement la couche d'argent, à détériorer complètement ses propriétés thermiques.

Une solution a consisté à augmenter de manière très significative les épaisseurs des deux couches fines métalliques, évoquées précédemment, de part et d'autre de la couche d'argent. Suffisamment épaisses, elles peuvent effectivement « faire écran » et protéger la couche d'argent. Si l'on parvient ainsi à conserver pratiquement inchangées les propriétés thermiques de l'empilement, notamment son émissivité, en revanche on en modifie les propriétés optiques : les deux couches métalliques s'oxydant largement « à la place » de la couche d'argent, elles entraînent notamment une forte augmentation de la transmission lumineuse T_{L}. On peut ainsi obtenir un vitrage bas-émissif trempé après dépôt de couches présentant une valeur de T_{L} supérieure à 80%, alors qu'elle était nettement inférieure à cette valeur avant la trempe. On pourra se reporter notamment à la demande de brevet EP-A-O 506 307 pour la description d'un tel empilement « trempable » avec une couche d'argent disposée entre deux couches d'étain et deux couches de nickel-chrome.

L'invention concerne donc plus particulièrement un procédé de fabrication d'un substrat en verre ou en matière plastique, muni d'au moins une couche que l'on peut traiter thermiquement, dans lequel le substrat est muni d'un empilement de couches par le procédé de pulvérisation cathodique, et qui comporte une ou plusieurs couches métalliques, notamment à base d'argent, et des couches protectrices immédiatement voisines de la ou desdites couches métalliques. Ces couches protectrices consistent en un métal ou un alliage métallique ou un métal oxydé de manière sous-stoéchiométrique ou un composé métallique oxydé de manière sous-stoéchiométrique.

Comme évoqué précédemment, les systèmes à couches avec une ou plusieurs couches métalliques du type argent comme couches fonctionnelles spécifiques ont pour avantage, vis-à-vis d'autres couches ou systèmes à couches, qu'ils ont un aspect colorimétrique relativement neutre en transparence et en réflexion, qu'ils présentent une transmission élevée dans le domaine spectral visible et une réflexion élevée dans le domaine spectral infrarouge. De plus, les couches métalliques, notamment à base d'argent présentent une conductibilité électrique relativement élevée, de sorte que des substrats en verre munis de tels systèmes à couches peuvent être utilisés également en tant que vitrages chauffants.

En outre, les empilements de couches peuvent être disposés sur la surface d'un substrat en verre ou sur toute autre feuille-support transparente, pour être ensuite assemblé en vitrage feuilleté, à l'aide de feuilles d'assemblage thermoplastiques du type polyvinylbutyral (PVB) ou éthylène-vinylacétate (EVA). On a ainsi des structures du type verre/PVB/verre, avec les couches se trouvant soit sur les faces dirigées vers l'extérieur des substrats de verre, soit, préférentiellement, sur leurs faces dirigées vers la feuille de polymère d'assemblage.

Les propriétés de transmission et de réflexion de la couche d'argent dans le domaine spectral visible peuvent ensuite être améliorées par les couches restantes de l'empilement. Du fait de leurs propriétés particulièrement bonnes, les systèmes à couches avec une couche à plusieurs couches d'argent comme couches fonctionnelles spécifiques sont utilisées dans une large mesure, non seulement dans le domaine du bâtiment mais aussi pour équiper des véhicules.

Non seulement pour l'utilisation dans le domaine du bâtiment, mais aussi pour l'équipement en vitrage de véhicules, les substrats en verre doivent fréquemment subir un traitement thermique à températures relativement élevées, par exemple lorsqu'elles doivent être bombées et/ou lorsqu'on veut modifier thermiquement leur état de contrainte, par un traitement du type recuit ou trempe. Pour ce type de traitement, les substrats en verre doivent être chauffés à température élevée, notamment d'au moins 450°C jusqu'à une température proche de la température de ramollissement du verre, soit une température d'environ 650°C. Lorsque le traitement thermique a lieu sur le substrat de verre une fois revêtu de son empilement de couches, ces couches atteignent également ces températures élevées. Ceci pose des exigences strictes en ce qui concerne l'empilement. Egalement, lorsque les couches sont disposées sur une feuille de polymère du type feuille de polymère thermoplastique d'assemblage, un traitement thermique à températures élevées peut être envisagé, par exemple lors d'un traitement ultérieur des feuilles de polymère une fois assemblées au(x) substrat(s) verrier(s) dans un vitrage feuilleté.

Lors d'un traitement thermique à températures élevées des substrats en verre revêtus, la couche d'argent peut subir des modifications, qui peuvent se traduire par une transmission lumineuse du substrat diminuée ou par un aspect mat tacheté dudit substrat. En outre, la résistance superficielle électrique de la couche d'argent augmente. Ces effets sont connus. On sait également que les modifications observées dans la couche d'argent sont provoquées par l'oxygène qui pénètre dans la couche d'argent aux températures élevées.

Pour éviter ou éliminer l'influence défavorable de l'oxygène lors du traitement thermique, une couche métallique mince est disposée sur la couche d'argent, ou la couche d'argent est placée entre deux couches métalliques minces. Ces couches métalliques, qui sont également désignées sous le terme de « couches métalliques sacrificielles » ou « couches de blocage » ont le rôle de fixer l'oxygène provenant de la couche d'argent. Elles s'oxydent partiellement ou totalement lors du dépôt de la couche d'argent et/ou lors du traitement thermique ultérieur du substrat. L'utilisation de telles couches métalliques est cependant limitée par le fait que la transmission lumineuse est diminuée par l'épaisseur croissante de celles-ci. Comme la transmission lumineuse s'élève par ailleurs suite à l'oxydation de ces couches métalliques, celles-ci ne doivent d'une part pas être trop épaisses pour qu'elles soient transformées lors du traitement thermique le plus complètement possible en couches d'oxyde. Mais d'autre part, ces couches métalliques doivent capter la totalité de l'oxygène. Pour ces raisons, l'épaisseur de la couche de métal sacrificiel doit être ajustée précisément en fonction de la nature de traitement thermique du substrat postérieur au dépôt des couches. Dans la pratique, il est difficile d'ajuster au mieux ces épaisseurs pour conserver l'intégrité de la couche d'argent sans être pénalisé en terme de niveaux de transmission lumineuse.

L'invention a donc pour but d'améliorer le procédé de fabrication de tels vitrages à couches qui permet de concilier deux objectifs : d'une part éviter la dégradation des couches fonctionnelles de l'empilement, notamment à base de métal du type argent lorsqu'elles sont soumises à des traitements thermiques, et d'autre part faire en sorte que les moyens mis en oeuvre pour éviter cette dégradation ne pénalisent pas les performances optiques du substrat après traitement thermique.

L'invention a pour objet un procédé de fabrication d'un substrat transparent, notamment en verre ou en matériau plastique, muni d'un empilement de couches comportant au moins une couche métallique à propriétés dans l'infrarouge, notamment bas-émissive du type argent. Ladite couche comporte au moins une sur-couche de protection, et de préférence également au moins une sous-couche de protection. D'après l'invention, la nature des matériaux constituant la ou les couches de protection est choisie de manière à ce qu'ils soient aptes à fixer l'oxygène, et on dépose la ou les couches métalliques à propriétés dans l'infrarouge par pulvérisation, notamment cathodique et assistée par champ magnétique, dans une atmosphère comprenant au moins un agent oxydant tel que de l'oxygène. L'atmosphère dans laquelle s'effectue le dépôt peut également contenir d'autres gaz habituels pour ce genre de matériaux, notamment des gaz inertes du type argon ou encore de l'azote.

Il a été montré de façon très surprenante, que l'on parvenait à améliorer le comportement de la couche à propriétés dans l'infrarouge du type argent lorsqu'elle est soumise à un traitement thermique postérieur à son dépôt, et ceci en y introduisant dès sa formation de l'oxygène.

Contrairement à toute attente, cette incorporation d'oxygène lors du dépôt lui permet de mieux supporter des températures élevées où le substrat se trouve, notamment, au contact de l'atmosphère ambiante comprenant forcément de l'oxygène.

La raison de l'effet positif de ce dépôt en présence d'oxygène reste inexpliquée. Une hypothèse est que l'oxyde d'argent formé lors du dépôt de la couche d'argent, si l'on prend l'exemple d'une couche métallique à base d'argent, se dissocie à la température du traitement thermique ultérieur du substrat porteur de l'empilement, les atomes d'oxygène ainsi « libérés » migrant vers la ou les couches de protection voisines et venant les oxyder, les transformant alors en couche(s) de composés métalliques non absorbants.

Lorsque l'on suit les tentatives d'explication données dans le document européen EP-0 281 894 B1 pour expliquer l'altération de la couche d'argent et l'influence favorable des couches métalliques voisines oxydées, l'altération de la couche d'argent s'appuierait sur une formation d'agglomérats d'argent, qui est défavorable en ce qu'elle conduit, suite à la dilatation thermique différente du substrat en verre et de la couche d'argent, à des états de mise sous contraintes de compression dans la couche d'argent. La formation d'agglomérats s'en trouve accélérée. L'oxydation des couches métalliques voisines est liée à une augmentation de volume, qui induit à nouveau des contraintes de traction dans la couche d'argent, qui s'opposent aux tensions de compression souhaitées. Si l'on accepte un tel mécanisme, alors l'effet favorable observé dans l'invention pourrait être expliqué par le fait que, par la migration des atomes d'oxygène de la couche d'argent, il se forme des vides dans la couche, vides qui conduisent à une autre formation de tensions de compression dans la couche d'argent et, ainsi, à une diminution de la formation de ces agglomérats tendant à dégrader la couche.

Avantageusement, pour obtenir un effet maximal de protection, on prévoit de munir la couche métallique à propriétés dans l'infrarouge, ou pour chacune d'entre-elles s'il y en a plusieurs, d'une sous-couche de protection et d'une sur-couche de protection.

On entend au sens de l'invention par sous-couche et sur-couche des couches à proximité immédiate de la couche métallique et de préférence qui lui soient contiguës.

De préférence, ces couches de protection sont des métaux ou composés métalliques à haute affinité avec l'oxygène. Il s'agit notamment de métal ou d'alliage métallique, ou de la forme oxydée de façon sous-stoéchiométrique du métal ou de l'alliage. Il peut aussi s'agir d'autres composés métalliques, par exemple des nitrures ou oxynitures, dans la mesure où ceux-ci ne sont pas non plus stoéchiométriquement oxydés et sont donc encore capables de fixer l'oxygène.

Il peut ainsi s'agir, avantageusement, de métaux ou de composés métalliques constitués à partir d'un au moins des métaux suivants : Ti, Al, W, Ta, Zr, Hf, Ce, V, Ni, Cr, Zn, Nb, sous forme métal, d'alliage métallique, de nitrures, oxydes ou oxynitrures de ces derniers à condition qu'ils ne soient pas oxydés ou que partiellement oxydés, en sous-stoéchiométrie d'oxygène.

Selon l'invention, l'atmosphère utilisée pour déposer la ou les couches métalliques à propriétés dans l'infrarouge contient de préférence au moins 5% en volume d'oxygène, notamment de 10 à 90% et de préférence de 20 à 70% en volume d'oxygène.

Avantageusement, on prévoit que les couches de protection aient une épaisseur géométrique comprise entre 1 et 20 nm, notamment entre 1 et 8 nm, de préférence entre 2 et 4 nm.

La couche métallique fonctionnelle est avantageusement en argent. Son épaisseur peut être choisie entre 7 et 13 nanomètres, notamment entre 9 et 12 nanomètres, quand on veut des vitrages à basse émissivité et haute transmission lumineuse (notamment au moins une T_{L} de 70 à 80%), particulièrement dans des pays plutôt froids. Quand on veut des vitrages à fonction anti-solaire, réfléchissants, destinés plutôt à équiper des bâtiments dans des pays chauds, la couche d'argent peut être choisie plus épaisse, par exemple de environ 12 nm jusqu'à 20 à 25 nm (ce qui a évidemment pour conséquence d'avoir des vitrages à transmission lumineuse plus faible, notamment inférieure à 60%).

Par ailleurs, comme il est connu de ce type d'empilement, on prévoit avantageusement de disposer la ou les couches à propriétés dans l'infrarouge munies de leur(s) couche(s) de protection entre deux revêtements de matériau diélectrique du type oxyde ou nitrure.

L'empilement peut comprendre en tant que couche(s) fonctionnelle(s) soit une seule couche d'argent, soit deux couches d'argent. Pour plus de détails sur ces empilements globalement de structure diélectrique/argent/diélectrique ou diélectrique/argent/diélectrique/argent/diélectrique (faisant abstraction des couches de protection) auxquels peut s'appliquer le procédé selon l'invention, on peut avantageusement se reporter, notamment, aux brevets EP-611 213, EP-638 528, EP-678 484 et EP-718 250.

Selon l'invention, on dépose de préférence l'ensemble des couches de l'empilement par pulvérisation cathodique assistée par champ magnétique.

Les couches métalliques du type argent déposées grâce au procédé selon l'invention étant aptes à subir sans altération de hautes températures, on peut alors faire subir au substrat porteur de l'empilement, une fois les couches déposées, tout traitement thermique du type bombage, trempe ou recuit.

L'invention s'applique avantageusement à la fabrication de vitrages bas-émissifs, anti-solaires ou chauffants, notamment sous la forme de vitrages monolithiques, vitrages multiples du type double-vitrage, ou vitrage feuilleté, aussi bien en tant que vitrages pour le bâtiment que pour équiper des véhicules.

L'invention permet ainsi de fabriquer des vitrages de ce type qui sont « bombables » et/ou « trempables ».

Dans ce qui suit, le procédé suivant l'invention et l'amélioration qui en résulte sont illustrés à l'aide d'un exemple de réalisation non limitatif et d'un exemple comparatif.

### EXEMPLE DE REALISATION

Dans un dispositif classique de dépôt par pulvérisation cathodique assistée par champ magnétique, on prépare les empilements de couches suivants avec les épaisseurs de couches données :

| | | |
|---|---|---|
| Verre flotté (silico-sodo-calcique clair) | (1) | 4 mm |
| SnO₂ | (2) | 40 nm |
| Nb₂O₅ | (3) | 12 nm |
| Nb | (4) | 2 nm |
| Ag | (5) | 10 nm |
| Nb | (6) | 4 nm |
| SnO₂ | (7) | 40 nm |

Les couches d'oxyde (2, 3, 7) sont chaque fois déposées dans un mélange gazeux de travail constitué de 40% en volume d'argon et de 60% en volume d'oxygène et à une pression totale de 3,5.10⁻³ mbar. Le dépôt des couches de protection métalliques (4, 6) de Nb se fait dans une atmosphère d'argon pur à une pression de 3.10⁻³ mbar, alors que la couche d'argent (5) est déposée dans une atmosphère gazeuse de travail constituée de 37,5% en volume d'argon et de 62,5% en volume d'oxygène et à une pression totale de 3,5.10⁻³ mbar.

Le substrat en verre avec cet empilement présente selon l'Illuminant D₆₅ une transmission T_{L} de 54% et une résistance carré superficielle R de 5 ohms par unité de surface quadratique évaluée par la mesure dite « des quatre points ».

Ce substrat en verre revêtu est chauffé à l'air à une température de 660°C, maintenu à cette température pour une période de 5 minutes, et ensuite refroidi à température ambiante dans de l'air au repos. La transmission et la résistance superficielle sont à nouveau mesurées. La transmission T_{L} est augmentée à 84% suite à l'oxydation des couches de Nb. La résistance superficielle reste inchangée à 5 ohms par unité de surface quadratique.

La couche ne présente pas de défauts optiques.

### EXEMPLE COMPARATIF

Dans le même dispositif classique de dépôt par pulvérisation, on prépare le même système à couches que dans l'exemple de réalisation, sur le même verre flotté et avec les mêmes épaisseurs de couches. La seule différence lors de la préparation consiste en ce que la couche d'argent est déposée à la même pression du gaz de travail, de manière classique, dans une atmosphère d'argon pur.

Le substrat en verre ainsi revêtu, présente une transmission T_{L} de 45% et une résistance carré superficielle de 5 ohms par unité de surface quadratique.

Le substrat en verre ainsi revêtu subit alors le même traitement thermique, exactement dans les mêmes conditions que celles décrites dans l'exemple de réalisation. Après refroidissement à température ambiante, le substrat en verre revêtu présente une transmission T_{L} de 56%. La résistance superficielle de la couche est si élevée qu'elle ne peut plus être mesurée. La couche montre des défauts et des troubles optiques à éclairement normal à la lumière du jour et a des points de corrosion rouges.

En conclusion, la présence d'oxygène lors du dépôt de la couche d'argent empêche son altération lors de traitements thermiques postérieurs à plus de 500°C, ce qui va à l'encontre de ce que l'on préconisait jusqu'alors dans ce type d'empilement. Bien sûr, l'invention s'applique également à d'autres empilements utilisant une ou plusieurs couches d'argent, ayant recours notamment à d'autres types de diélectrique pour les couches 2, 3 et 7, par exemple des empilements utilisant des matériaux diélectriques du type Ta₂O₅, ZnO, des séquences du type Nb₂O₅/ZnO ou SnO₂/Ta₂O₅, des nitrures du type Si₃N₄, ...

## Revendications

1. Procédé de fabrication d'un substrat transparent, notamment en verre ou en matériau plastique, muni d'un empilement de couches comportant au moins une couche métallique à propriétés dans l'infrarouge, notamment bas-émissive du type argent, la couche métallique comportant au moins une sur-couche de protection et de préférence également au moins une sous-couche de protection, ***caractérisé en ce qu***'on choisit la nature des matériaux constituant la ou les couches de protection de façon à ce qu'ils soient aptes à fixer l'oxygène ***et en ce qu***'on dépose la ou les couches métalliques à propriétés dans l'infrarouge par pulvérisation dans une atmosphère comprenant au moins un agent oxydant, notamment de l'oxygène.

2. Procédé selon la revendication 1, ***caractérisé en ce que*** chacune des couches métalliques à propriétés dans l'infrarouge est munie d'une sur-couche de protection et d'une sous-couche de protection.

3. Procédé selon la revendication 1 ou la revendication 2, ***caractérisé en ce que*** les couches de protection sont en métal, en alliage métallique, en métal ou en alliage métallique oxydé de façon sous-stoéchiométrique ou en composés métalliques du type nitrures non oxydés ou oxydés de façon sous-stoéchiométrique.

4. Procédé selon l'une des revendications précédentes, ***caractérisé en ce que*** les couches de protection sont des métaux ou composés métalliques à affinité élevée pour l'oxygène.

5. Procédé selon l'une des revendications précédentes, ***caractérisé en ce que*** les couches de protection sont à base d'au moins un des métaux appartenant au groupe du Ti, Al, W, Ta, Zr, Hf, Ce, V, Ni, Cr, Zn, Nb, sous forme de métal, d'alliage métallique, de nitrures ou sous forme de l'un de ces matériaux oxydés de façon sous-stoéchiométrique.

6. Procédé selon l'une des revendications précédentes, ***caractérisé en ce que*** l'atmosphère lors du dépôt par pulvérisation de la ou des couches métalliques à propriétés dans l'infrarouge contient au moins 5% en volume d'oxygène, notamment de 10 à 90% et de préférence de 20 à 70% en volume d'oxygène.

7. Procédé selon l'une des revendications précédentes, ***caractérisé en ce que*** la ou les couches de protection ont une épaisseur géométrique comprise entre 1 et 20 nm, notamment entre 1 et 8 nm, de préférence entre 2 et 4 nm.

8. Procédé selon l'une des revendications précédentes, ***caractérisé en ce que*** la couche métallique à propriétés dans l'infrarouge a une épaisseur comprise entre 7 et 13 nm, notamment entre 9 et 12 nm pour lui conférer des propriétés de bas-émissivité.

9. Procédé selon l'une des revendications 1 à 7, ***caractérisé en ce que*** la couche métallique à propriétés dans l'infrarouge a une épaisseur de 12 à 25 nm, pour lui conférer des propriétés anti-solaires.

10. Procédé selon l'une des revendications précédentes, ***caractérisé en ce que*** la ou les couches métalliques munies de leur(s) couche(s) de protection sont disposées entre deux revêtements de matériau diélectrique du type oxyde ou nitrure.

11. Procédé selon l'une des revendications précédentes, ***caractérisé en ce que*** l'empilement de couches comprend une ou deux couches d'argent.

12. Procédé selon l'une des revendications précédentes, ***caractérisé en ce que*** l'ensemble des couches est déposé par pulvérisation cathodique assistée par champ magnétique.

13. Procédé selon l'une des revendications précédentes, ***caractérisé en ce qu***'on traite thermiquement le substrat une fois les couches déposées, traitement thermique du type bombage, trempe ou recuit.

14. Application du procédé selon l'une des revendications précédentes à la fabrication de vitrages bas-émissifs, anti-solaires, chauffants, notamment sous forme de vitrages monolithiques, de vitrages multiples type double-vitrages ou de vitrages feuilletés.

15. Application du procédé selon l'une des revendications 1 à 13 à la fabrication de vitrages bas-émissifs, anti-solaires ou chauffants qui soient bombables/trempables.
